# EUROPEAN PATENT APPLICATION

(11) **EP 1 304 585 A1**
(43) Date of publication of application: **23.04.2003**
(21) Application number: 01949938.3
(22) Date of filing: 11.07.2001
(51) Int. Cl.: G02B 5/28, G02B 5/00, G02B 3/00, G02B 6/28, G02B 27/10, H04B 10/12, C23C 14/34

(54) **OPTICAL ELEMENT HAVING WAVELENGTH SELECTIVITY**

(30) Priority: 14.07.2000 JP 2000214379; 13.09.2000 JP 2000278268
(71) Applicant: Nippon Sheet Glass Co., Ltd., Osaka-shi, Osaka 541-8559 (JP)
(72) Inventor: TOYOSHIMA, Takayuki, c/o NIPPON SHEET GLASS CO LTD, Osaka-shi, Osaka 541-8559 (JP); ANZAKI, Toshiaki, c/o NIPPON SHEET GLASS CO., LTD., Osaka-shi, Osaka 541-8559 (JP)
(74) Representative: Rupp, Christian, Dipl.-Phys.
(86) International application number: JP0106010
(87) International publication number: WO02006861

(57) **Abstract**

An optical element having wavelength selectivity, which is easy to manufacture and reduces the manufacturing cost. The optical element comprises a lens array (12) having one end face and a plurality of lenses (L1-L8) arranged on the one end face, and a multi-layered film filter (13) formed on the one end face (14) of the lens array. The multi-layered film filter includes high refractive-index dielectric layers and low refractive-index dielectric layers laminated alternately and its film thickness continuously changes in accordance with positions of the individual lenses. The center wavelength of transmitted light from the multi-layered film filter varies in accordance with the position of the lens array. In a case where mixed light enters the multi-layered film filter from the individual lenses, the mixed light is demultiplexed into lights of different center wavelengths by the multi-layered film filter that has difference thicknesses.

## Description

### [Technical Field]

The present invention relates to an optical element having wavelength selectivity, and, more particularly, to an optical element which multiplexes lights of different wavelengths or demultiplexes multiplexed light wavelength by wavelength.

### [Background Art]

Optical elements using an optical fiber and collimator lens have conventionally been used as optical communication equipment parts. When optical communication becomes very popular from now on, miniaturization and integration of optical communication equipment parts become further essential. Optical communication requires a technique which demultiplexes light by selectively transmitting or reflecting light wavelength by wavelength. A multi-layered film filter which has high refractive-index dielectric layers and low refractive-index dielectric layers alternately laminated, e.g., an edge filter or a narrow-band filter, is known as an optical filter.

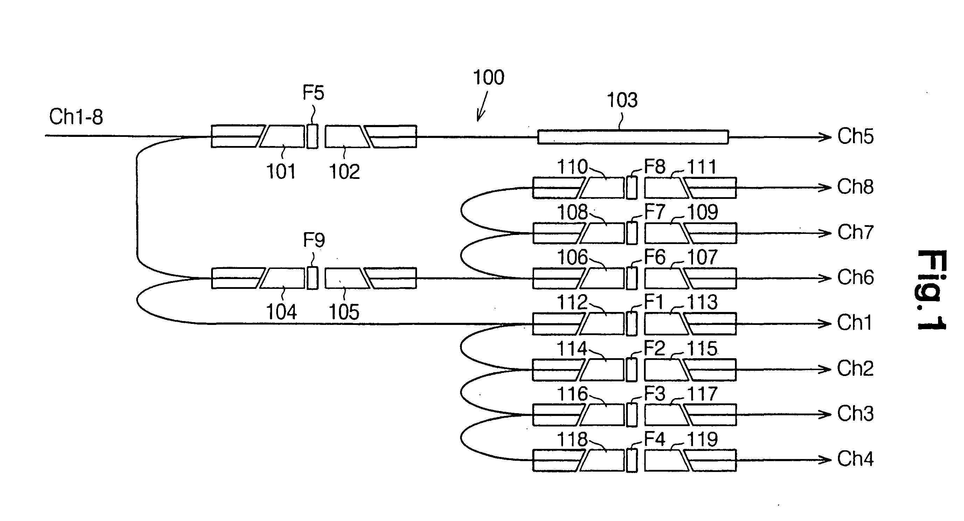

An optical communication equipment part 100 as shown in, for example, Fig. 1 is known as a conventional optical communication equipment part which uses such an optical filter. The optical communication equipment part 100 demultiplexes mixed light including eight kinds of optical signals (Ch1-8) with different center wavelengths into individual optical signals.

As shown in Fig. 1, the optical communication equipment part 100 includes a plurality of collimator lenses 101, 102, 104 to 119, an attenuator 103 and a plurality of optical filters F1 to F9. Each of the collimator lenses 101, 102, 104-119 is constituted by a rod lens, and the attenuator 103 attenuates the light intensity of incident light to a predetermined value. An optical signal is sent among those members through an optical fiber.

Mixed light which has entered the optical communication equipment part 100 is first separated into transmitted light (optical signal Ch5) and reflected light (optical signals Ch1-4, 6-8) by the optical filter F5. The optical signal Ch5 is let out after its light intensity is attenuated to a predetermined value by the attenuator 103. The optical signals Ch1-4, 6-8 are separated into transmitted light (optical signals Ch6-8) and reflected light (optical signals Ch1-4) by the optical filter F9. The optical signals Ch6-8 are separated into transmitted light (optical signal Ch6) and reflected light (optical signals Ch7, 8) by the optical filter F6. The optical signal Ch6 is let out through the collimator lens 107. Meanwhile, the optical signals Ch7, 8 are separated into transmitted light (optical signal Ch7) and reflected light (optical signal Ch8) by the optical filter F7. The optical signal Ch7 is let out through the collimator lens 109, and the optical signal Ch8 passes through the optical filter F8 and is let out through the collimator lens 111.

The optical signals Ch1-4 as reflected light from the optical filter F9 are separated into transmitted light (optical signal Ch1) and reflected light (optical signals Ch2-4) by the optical filter F1, and the optical signal Ch1 is let out through the collimator lens 113. The optical signals Ch2-4 are separated into transmitted light (optical signal Ch2) and reflected light (optical signals Ch3, 4) by the optical filter F2, and the optical signal Ch2 is let out through the collimator lens 115. The optical signals Ch3, 4 are separated into transmitted light (optical signal Ch3) and reflected light (optical signal Ch4) by the optical filter F3. Ch3 is let out through the collimator lens 117, and the optical signal Ch4 passes through the optical filter F4 and is let out through the collimator lens 119.

The prior art technique illustrated in Fig. 1 has the following problems.
(1) Because multiplexed, mixed light is separated into lights of different center wavelengths, many optical members, such as optical filters and collimator lenses, are needed, thus increasing the manufacturing cost. With regard to optical filters, particularly, since multiple optical filters of different kinds should be used, it takes time to prepare multiple optical filters, further increasing the manufacturing cost.
(2) It is necessary to individually mount the optical filters F1-F9 to the end faces of the associated collimator lenses, and, what is more, because the collimator lenses are relatively small, the mounting of the optical filters is a very delicate work. Therefore, the mounting of the optical filters is difficult and the working efficiency is poor. As a result, the manufacturing cost is further increased.
(3) A troublesome alignment work is needed to coincide the optical axes of the collimator lenses located in front and in the rear of each optical filter with each other. The alignment work should be executed by the number of the optical filters, thus increasing the manufacturing steps.

### [Disclosure of Invention]

Paying attention to the conventional problems, the present invention has been made and aims at providing an optical element having wavelength selectivity, which is easy to manufacture and reduces the manufacturing cost.

To achieve the above-described object, according to a first aspect of the present invention, there is provided an optical element having wavelength selectivity, comprising a lens array having one end face and a plurality of lenses arranged on the one end face; and a multi-layered film filter formed on the one end face of the lens array. The multi-layered film filter includes high refractive-index dielectric layers and low refractive-index dielectric layers laminated alternately and its film thickness continuously changes in accordance with positions of the individual lenses.

It is preferable that the plurality of lenses should be aligned in a line toward a second end from a first end of the one end face of the lens array and the thickness of the multi-layered film filter should linearly change toward the second end from the first end.

It is preferable that the lens array should be a rod lens array including a plurality of rod lenses.

It is preferable that the lens array should be a gradient index planar microlens including a single substrate and a plurality of microlenses formed in a line on the substrate.

It is preferable that the plurality of microlenses should protrude from the substrate.

It is preferable that the lens array should have another end face facing the one end face; and the optical element should further have a light emitting device for emitting light toward the multi-layered film filter via individual lenses of the lens array.

It is preferable that the light emitting device should be integral with the lens array.

It is preferable that the light emitting device should include a plurality of light sources provided in association with individual lenses of the lens array.

It is preferable that the lens array should have another end face facing the one end face; and the optical element should further have a plurality of light receiving elements for respectively receiving a plurality of optical signals having different center wavelengths, obtained by demultiplexing incident light by the multi-layered film filter, via individual lenses of the lens array.

It is preferable that the plurality of light receiving elements is integral with the lens array.

According to a second aspect of the present invention, there is provided a method of manufacturing an optical element having wavelength selectivity. The manufacturing method comprises a step of preparing a lens array having one end face and a plurality of lenses arranged on the one end face; and a step of directly forming a multi-layered film filter on the one end face of the lens array by a physical vapor deposition method in such a way that a thickness continuously changes in accordance with positions of the plurality of individual lenses.

It is preferable that the manufacturing method should further comprise a step of arranging the lens array in such a way that the one end face of the lens array is inclined with respect to an evaporation source or a target, prior to the step of forming the multi-layered film filter.

It is preferable that the manufacturing method should further comprise a step of arranging a film thickness correcting plate having a substantially trapezoidal opening portion between the lens array and the evaporation source or target, prior to the step of forming the multi-layered film filter.

### [Brief Description of the Drawings]

To better understand the present invention together with the object and features of the present invention, the following description of representative embodiments together with the accompanying drawings will be referred to.

Fig. 1 is a schematic connection diagram of a conventional optical element.

Fig. 2 is a schematic cross-sectional view of an optical element according to a first embodiment of the present invention.

Fig. 3 is a schematic perspective view of a deposition apparatus used in manufacturing the optical element in Fig. 2.

Fig. 4 is a schematic perspective view of a rod lens array of the optical element in Fig. 2.

Fig. 5 is a graph showing the characteristic of a multi-layered film filter of the optical element in Fig. 2.

Fig. 6 is a graph showing a change in the center wavelength of the multi-layered film filter with respect to the rod lens array in Fig. 4.

Fig. 7 is a schematic cross-sectional view of an optical element according to a second embodiment of the present invention.

Fig. 8 is a schematic cross-sectional view of an optical element according to a third embodiment of the present invention.

Fig. 9 is a schematic cross-sectional view of an optical element according to a fourth embodiment of the present invention.

Fig. 10 is a schematic perspective view of a planar microlens of the optical element in Fig. 9.

Fig. 11 is a schematic perspective view of another example of the planar microlens of the optical element in Fig. 9.

Fig. 12 is a schematic perspective view of a film thickness correcting plate.

Fig. 13 is a schematic perspective view of a further example of the planar microlens of the optical element in Fig. 9.

### [Best Mode for Carrying Out the Invention]

### [First Embodiment]

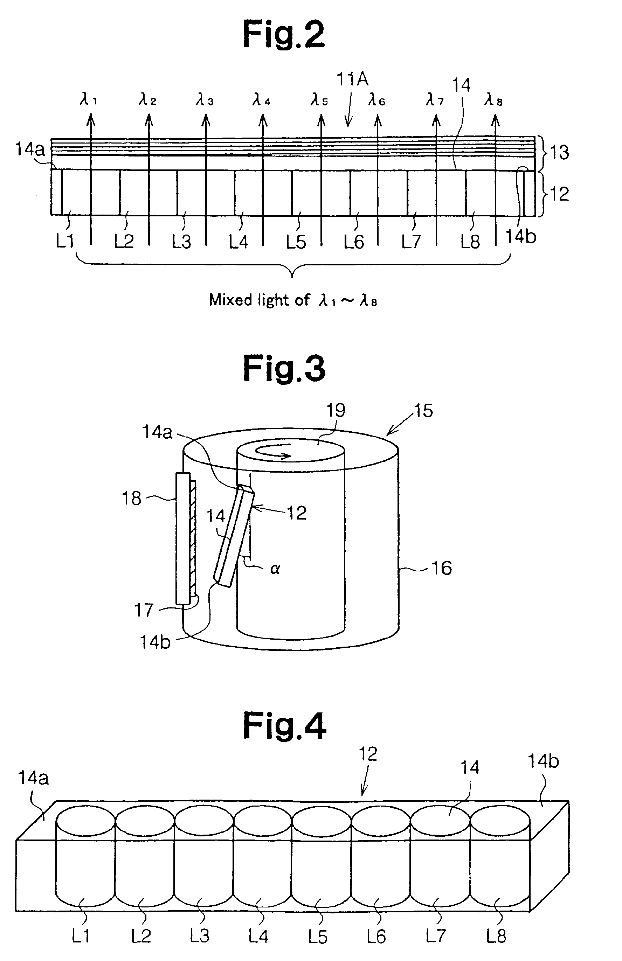

Fig. 2 is a cross-sectional view schematically illustrating an optical element 11A according to the first embodiment of the present invention. The optical element 11A, as shown in Fig. 2, includes a rod lens array 12 and a multi-layered film filter 13. The multi-layered film filter 13 is formed by alternately laminating high refractive-index dielectric layers and low refractive-index dielectric layers on one end face 14 of the rod lens array 12 in a lengthwise direction.

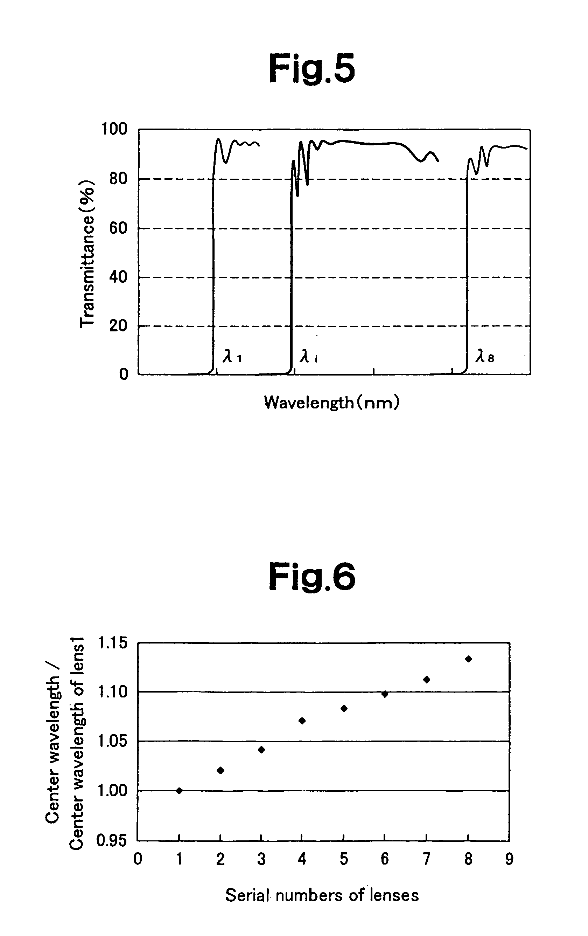

As shown in Fig. 4, the rod lens array 12 includes plural (eight in this embodiment) rod lenses L1 to L8. The rod lenses L1-L8 are gradient index optical elements and are arranged side by side in such a way that the optical axes of the adjoining rod lenses become in parallel. A resin is filled in gaps between and around the individual rod lenses L1-L8, and the rod lens array 12 is integrated by a holding plate (not shown). The one end face 14 of the rod lens array 12 in the lengthwise direction is flat.

The multi-layered film filter 13 is formed on the entire surface of the one end face 14 of the rod lens array 12 in such a way that its thickness continuously changes in accordance with the positions of the individual rod lenses L1-L8. Specifically, the film thickness of the multi-layered film filter 13 linearly increases from one end 14a of the rod lens array 12 to the other end 14b in the layout direction of the rod lenses L1-L8. That is, the thickness of the multi-layered film filter 13 increases toward the other end 14b of the rod lens array 12 from one end 14a. Therefore, the center wavelength of light which passes through the individual portions of the multi-layered film filter 13 becomes shorter as the thickness of the multi-layered film filter 13 becomes thinner. As shown in Fig. 2, the center wavelengths (λ1 to λ8) of lights which pass the multi-layered film filter 13 at portions corresponding to the rod lenses L1-L8 are different.

Fig. 5 shows the relationship between the wavelengths of the individual transmitted lights of the multi-layered film filter 13 and the transmittances. Fig. 5 shows the characteristic in a case where the multi-layered film filter 13 is an edge filter. In Fig. 6, the horizontal scale indicates the rod lenses L1-L8 as serial numbers 1 to 8 of the lenses, and the vertical scale indicates the ratios of the center wavelengths of other rod lenses L2-L8 to the center wavelength of the lens 1 (rod lens L1). For example, the ratio of the center wavelength of the lens 3 (rod lens L3) to the center wavelength of the lens 1 is approximately 1.04 and the ratio of the center wavelength of the lens 6 (rod lens L6) to the center wavelength of the lens 1 is approximately 1.10.

The multi-layered film filter 13 is a narrow-band filter or an edge filter formed by alternately laminating high refractive-index dielectric layers and low refractive-index dielectric layers, and is directly deposited on one end face 14 of the rod lens array 12 in vacuum by a physical vapor deposition method. Here, for example, a tantalum oxide is used for the high refractive-index dielectric layers and a silicon oxide is used for the low refractive-index dielectric layers.

The multi-layered film filter 13 is deposited by sputtering (physical vapor deposition method) by using a deposition apparatus 15, for example, as shown in Fig. 3. A target 17 is attached to a target electrode 18 in a vacuum chamber 16 in the deposition apparatus 15. A negative voltage is applied to the target electrode 18 by a DC voltage source or an AC voltage source or a pulse voltage source. A vacuum exhaust system (not shown) is attached to the vacuum chamber 16. A single or plural rod lens arrays 12 are fixed at approximately equal intervals to the outer surface of a rotary drum 19 provided in the vacuum chamber 16. Fig. 3 shows a single rod lens array 12.

Each rod lens array 12 is fixed to the outer surface of the rotary drum 19 in such a way that its lengthwise-directional one end face 14 faces the target 17 in a state inclined by an angle α with respect to the target 17.

After the internal space of the vacuum chamber 16 is set to a high vacuum state by the vacuum exhaust system, a negative voltage is applied to the target electrode 18 with an inactive gas of, for example, Ar fed into the chamber 16. Then, a plasma is produced in the vapor near the surface of the target electrode 18, and target atoms are emitted from the surface of the target electrode 18 by the sputtering phenomenon. The emitted target atoms are adhered and deposited on the one end face 14 of the rod lens array 12, thereby forming a thin film.

In a step of forming a thin film on the one end face 14 of the rod lens array 12 in this manner, the rotary drum 19 is rotated at a predetermined speed and the one end face 14 of each rod lens array 12 passes in front of the target 17 in an inclined state. Accordingly, the distance between the one end face 14 and the target 17 (hereinafter called a target-array distance) becomes shorter toward the other end 14b from the one end 14a of the rod lens array 12. Therefore, the film that is formed on the one end face 14 becomes thicker toward the other end 14b from the one end 14a. The thickness of the multi-layered film filter 13 that is formed on the one end face 14 of the rod lens array 12 in this manner increases linearly toward the other end (second end) 14b from the one end (first end) 14a of the rod lens array 12 (see Fig. 2) in the layout direction of the individual rod lenses L1 to L8.

Note that the multi-layered film filter 13 can be deposited by, besides the sputtering method, vacuum deposition or other sputtering methods as the physical vapor deposition method. To acquire a high weather resistance by the multi-layered film filter 13, magnetron sputtering, ion beam sputtering and ion assist vapor deposition can be used.

The optical element 11A of the first embodiment has the following advantages.
(1) The multi-layered film filter 13 that demultiplexes mixed light is formed on the entire surface of the lengthwise-directional one end face 14 of the rod lens array 12 by sputtering in such a way that its thickness varies. This eliminates the need for a plurality of optical filters of different types for demultiplexing mixed light, so that the number of parts of the optical element 11A is reduced and the multi-layered film filter 13 is formed easily. This results in reduction in the number of working steps of the optical element 11A and in the manufacturing cost as well.
(2) The film thickness of the multi-layered film filter 13 linearly increases toward the other end 14b from the one end 14a of the rod lens array 12 in the layout direction of the rod lenses L1-L8. Therefore, the relationship between the positions of the individual rod lenses L1-L8 and the center wavelengths of lights that pass through individual portions of the multi-layered film filter 13 corresponding to the positions is determined uniquely. That is, the individual positions of the multi-layered film filter 13 and the center wavelengths of transmitted lights are expressed by a linear equation. Therefore, it is easy to change the design associated with the positions and the quantity of the individual rod lenses L1-L8.
(3) In a case where the number of lenses (eight in this embodiment) of the rod lens array 12 is increased to increase the amount of information, the center wavelengths of the individual portions of the multi-layered film filter that respectively correspond to the increased rod lenses are defined uniquely by the thicknesses of the individual portions. It is therefore possible to easily cope with an increase in the number of lenses.

### [Second Embodiment]

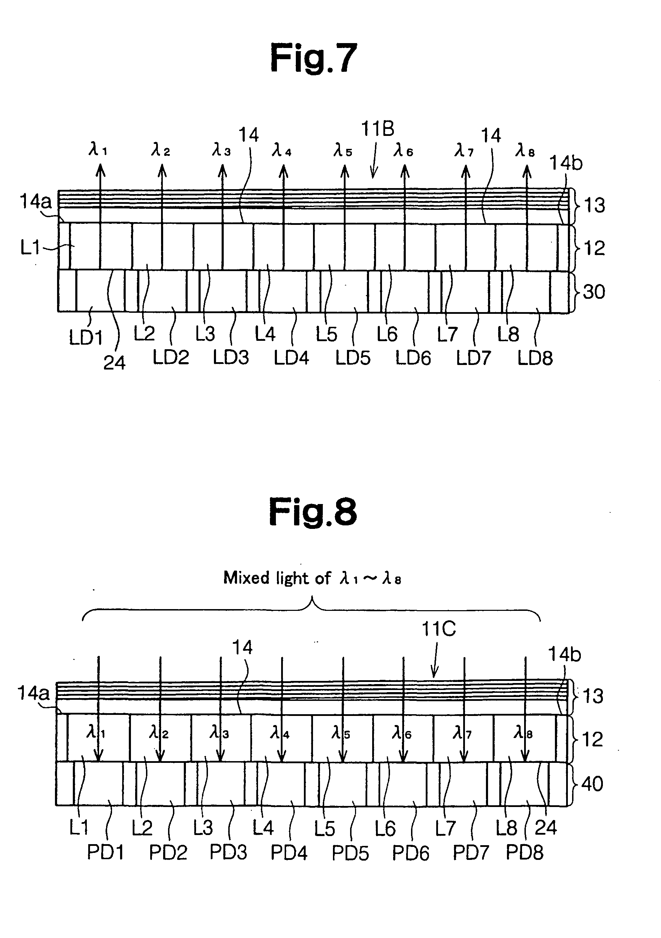

Fig. 7 is a cross-sectional view schematically showing an optical element 11B according to the second embodiment of the present invention. The optical element 11B includes a laser diode array (light emitting device) 30 which emits light toward to the multi-layered film filter 13 via the individual rod lenses L1-L8 of the rod lens array 12 in addition to the structure of the optical element 11A of the first embodiment. The laser diode array 30 is provided on an other end face 24 facing the one end face 14 of the rod lens array 12 and integrated with the rod lens array 12. The laser diode array 30 has eight laser diodes (a plurality of light sources) LD1 to LD8 provided in association with the individual rod lenses L1-L8.

The individual laser diodes LD1-LD8 emit laser lights of, for example, the same center wavelength. The half-value widths of the laser lights from the individual laser diodes LD1-LD8 may be wide. That is, according to the second embodiment, light having eight types of wavelengths λ1 to λ8 is demultiplexed by the multi-layered film filter 13 within the wavelength range of the half-value widths of the individual laser diodes LD1-LD8. The multi-layered film filter 13 is constructed as a narrow-band filter.

The laser light to be output from the laser diode LD1 is made parallel by the rod lens L1 and enters the multi-layered film filter 13. Of the laser lights incident to the multi-layered film filter 13, the light that has a center wavelength of λ1 passes through the multi-layered film filter 13. Likewise, the laser lights to be output from the laser diodes LD2-LD8 are made parallel by the rod lenses L2-L8 respectively and the lights that respectively have center wavelengths of λ2-λ8 pass through the multi-layered film filter 13.

The optical element 11B of the second embodiment has the following advantages.
(1) The lights that are emitted from the individual laser diodes LD1-LD8 of the laser diode array 30 enter the multi-layered film filter 13 via the individual rod lenses L1-L8 and are demultiplexed to lights with different center wavelengths by the multi-layered film filter 13. A multiplexed, mixed light is produced by converging the demultiplexed lights with different center wavelengths. Given that the number of lenses of the rod lens array 12 is n, for example, mixed light including lights with center wavelengths of λ1 to λn is generated.
(2) The laser diode array 30 is integrated with the rod lens array 12. Therefore, the lights to be emitted from the individual laser diodes LD1-LD8 directly enter the corresponding rod lenses L1-L8. As a result, the optical loss is reduced. Further, the connection to the light sources, for example, laser diodes, becomes unnecessary, thereby providing an optical element easy to use.
(3) As ON and OFF of the laser diodes LD1-LD8 are individually controlled by a control circuit (not shown9, it is possible to emit an optical signal having an information amount of 2⁸ from the multi-layered film filter 13. When only the laser diodes LD1 and LD2 are turned ON, for example, lights with center wavelengths of λ1 and λ2 are extracted (selected) by the multi-layered film filter 13 and a mixed light signal including lights with center wavelengths of λ1 and λ2 can be produced by multiplexing both lights.

### [Third Embodiment]

Fig. 8 is a cross-sectional view schematically showing an optical element 11C according to the third embodiment of the invention. The optical element 11C includes a photodetector array 40 in addition to the structure of the optical element 11A of the first embodiment. The photodetector array 40 detects a plurality of lights (lights with wavelengths λ1-λ8), demultiplexed by the multi-layered film filter 13, via the individual rod lenses L1-L8 of the rod lense array 12. The photodetector array 40 is provided on the other end face 24 facing the one end face 14 of the rod lens array 12 and is integrated with the rod lens array 12. The photodetector array 40 has eight photodetectors PD1 to PD8 provided in association with the rod lenses L1-L8. The multi-layered film filter 13 is constructed as a narrow-band filter.

The optical element 11C of the third embodiment has the following advantages.
(1) Mixed light including lights with center wavelengths λ1-λ8 is demultiplexed by the multi-layered film filter 13 and the demultiplexed lights with the center wavelengths λ1-λ8 are detected by the photodetectors PD1-PD8 via the rod lenses L1-L8. Given that the number of the rod lenses is n and the mixed light is an optical signal having an information amount of 2ⁿ, for example, mixed light is separated to lights with different center wavelengths λ1-λn for the respective rod lenses L1-L8 by the multi-layered film filter 13 and they are received by the respective photodetectors PD1-PD8. Therefore, the photodetector array 40 can convert an optical signal having an information amount of 2ⁿ to an electric signal having an information amount of 2ⁿ.

### [Fourth Embodiment]

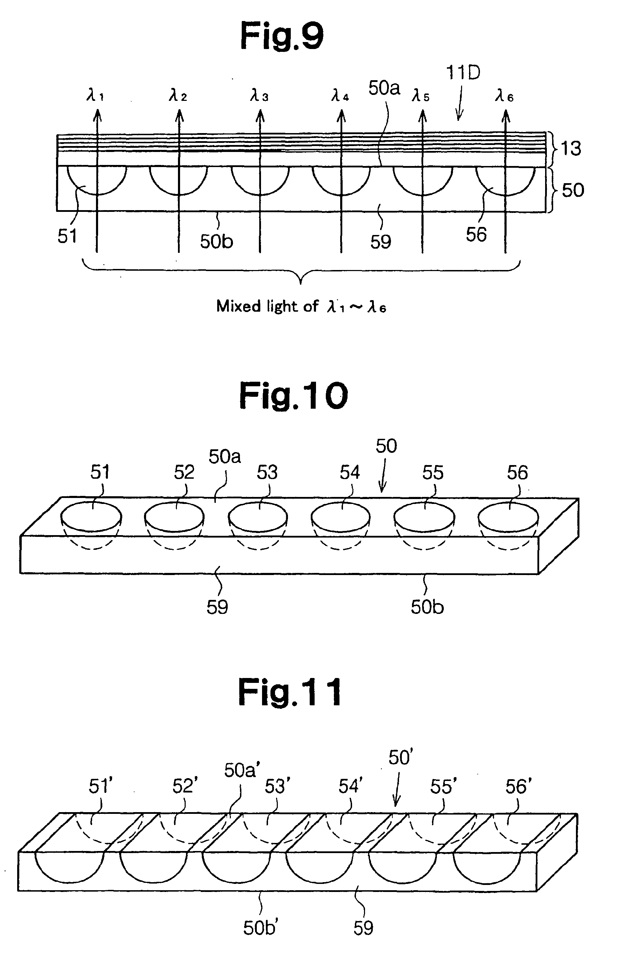

Fig. 9 is a cross-sectional view schematically showing an optical element 11D according to the fourth embodiment of the present invention. Fig. 10 is a schematic perspective view of a planar microlens 50 of the optical element 11D. The optical element 11D has a gradient index planar microlens 50 in place of the rod lens array 12 of the first embodiment shown in Fig. 2.

The planar microlens 50 has, for example, six microlenses 51 to 56, which are graded-index areas, on a single substrate 59. As shown in Figs. 9 and 10, a lengthwise-directional one end face 50a of the microlens 50 is formed as a flat face and the multi-layered film filter 13 is formed on that one end face 50a.

The optical element 11D of the fourth embodiment has the same advantages as the first embodiment.

It should be apparent to those skilled in the art that the present invention may be embodied in other substituting examples without departing from the spirit and scope of the present invention.

In the first embodiment, the number of rod lenses of the rod lens array 12 is not limited to eight. A plurality of rod lenses may be laid out in two or more rows.

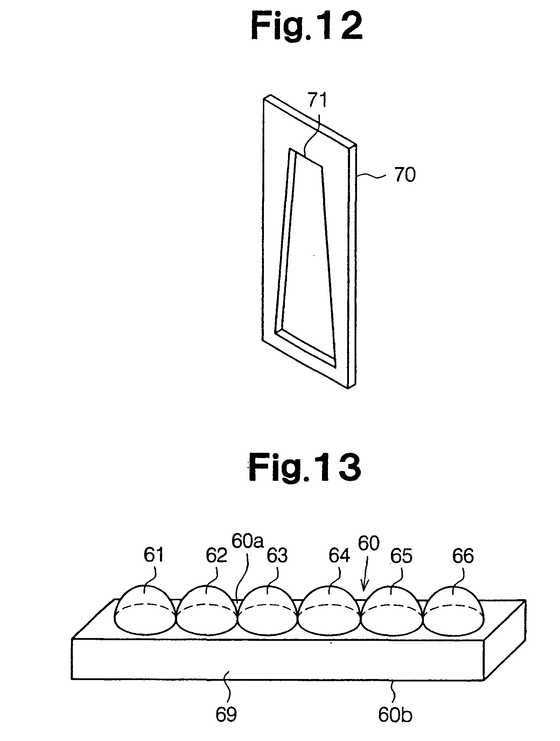

In the first embodiment, the multi-layered film filter 13 may be formed via a film thickness correcting plate 70 (see Fig. 12) provided, for example, between the rod lens array 12 and the target 17. The film thickness correcting plate 70 has a substantially trapezoidal opening portion (71). In this case, a part of the surface of the target 17 which is exposed with respect to the one end face 14 is shielded by the film thickness correcting plate 70.

Specifically, the opening portion (71) is formed in a substantially trapezoidal shape and is formed in such a way that the width of the opening portion changes gradually toward the other end from the lengthwise-directional one end of the one end face 14 of the rod lens array 12. The target 17 and the rod lens array 12 are arranged in such a way that their lengthwise directions become the same. Therefore, the multi-layered film filter which has a film thickness according to the exposed width (the width of the opening portion) of the surface of the target 17 is formed on the lengthwise-directional one end face 14 of the rod lens array 12. That is, the film thickness of the multi-layered film filter which faces a portion at which the width of the opening of the surface of the target 17 is narrow is thin, and the film thickness of the multi-layered film filter which faces a portion at which the width of the opening is wide is thick. The film thickness correcting plate 70 may be provided between the lens array 12 and an evaporation source.

In the second embodiment, an LED array may be used as the light emitting device.

In the fourth embodiment, the multi-layered film filter 13 may be formed on an other end face 50b facing the one end face 50a of the gradient index planar microlens 50.

In the fourth embodiment, a gradient index planar microlens 50' shown in Fig. 11 may be used in the optical element 11D. Six microlenses 51' to 56' which are graded-index areas are formed in a semicolumnar shape on the substrate 59 of the microlens 50'. In this case, the multi-layered film filter 13 is formed on one of both end faces 50a', 50b' of the substrate 59. Both end faces 50a', 50b' are formed flat.

In the fourth embodiment, a gradient index planar microlens 60 shown in Fig. 13 may be used in the optical element 11D. For example, six substantially hemispherical microlenses 61 to 66 are protrusively formed on one end face 60a of a substrate 69 of the planar microlens 60.

## Claims

1. An optical element having wavelength selectivity, **characterized by**:
a lens array having one end face and a plurality of lenses (L1-L8) arranged on the one end face; and
a multi-layered film filter (13) which is formed on the one end face (14) of the lens array and includes high refractive-index dielectric layers and low refractive-index dielectric layers laminated alternately and whose film thickness continuously changes in accordance with positions of the individual lenses.

2. The optical element according to Claim 1, **characterized in that** the plurality of lenses are aligned in a line toward a second end from a first end of the one end face of the lens array and the film thickness of the multi-layered film filter linearly changes toward the second end from the first end.

3. The optical element according to Claim 1 or 2, **characterized in that** the lens array is a rod lens array including a plurality of rod lenses.

4. The optical element according to Claim 1 or 2, **characterized in that** the lens array is a gradient index planar microlens (50, 60) including a single substrate (59, 69) and a plurality of microlenses (51-56, 61-66) formed in a line on the substrate.

5. The optical element according to Claim 4, **characterized in that** the plurality of microlenses (61-66) protrude from the substrate.

6. The optical element according to any one of Claims 1 to 5, **characterized in that** the lens array has an other end face (24) facing the one end face; and
the optical element further has a light emitting device (30) formed on the other end face for emitting light toward the multi-layered film filter via individual lenses of the lens array.

7. The optical element according to Claim 6, **characterized in that** the light emitting device is integral with the lens array.

8. The optical element according to Claim 6 or 7, **characterized in that** the light emitting device includes a plurality of light sources (LD1-LD8) provided in association with individual lenses of the lens array.

9. The optical element according to any one of Claims 1 to 5, **characterized in that** the lens array has an other end face facing the one end face; and
the optical element further has a plurality of light receiving elements (PD1-PD8) formed on the other end face for respectively receiving a plurality of optical signals having different center wavelengths, obtained by demultiplexing input light by the multi-layered film filter, via individual lenses of the lens array.

10. The optical element according to Claim 9, **characterized in that** the plurality of light receiving elements are integral with the lens array.

11. A method of manufacturing an optical element having wavelength selectivity, **characterized by**:
a step of preparing a lens array (12) having one end face and a plurality of lenses (L1-L8) arranged on the one end face; and
a step of directly forming a multi-layered film filter on the one end face of the lens array by a physical vapor deposition method in such a way that the film thickness continuously changes in accordance with positions of the plurality of individual lenses.

12. The optical element manufacturing method according to Claim 11, further **characterized by**:
a step of arranging the lens array in such a way that the one end face of the lens array is inclined with respect to an evaporation source or a target, prior to the step of forming the multi-layered film filter.

13. The optical element manufacturing method according to Claim 12, further **characterized by**:
a step of arranging a film thickness correcting plate (70) having a substantially trapezoidal opening portion (71) between the lens array and the evaporation source or target, prior to the step of forming the multi-layered film filter.
